# EUROPEAN PATENT APPLICATION

(11) **EP 4 617 095 A1**
(43) Date of publication of application: **17.09.2025**
(21) Application number: 25163134.7
(22) Date of filing: 12.03.2025
(51) Int. Cl.: B60K 15/07, E02F 9/08, E02F 9/10

(54) **HYDROGEN-POWERED VEHICLE AND TRANSPORT METHOD OF SAID VEHICLE**

(30) Priority: 12.03.2024 IT 202400005476
(71) Applicant: PRINOTH S.p.A., 39049 Vipiteno (BZ) (IT)
(72) Inventor: THOM, Jamie, 39049 Vipiteno (BZ) (IT)
(74) Representative: Studio Torta S.p.A.

(57) **Abstract**

A hydrogen-powered vehicle has a frame (2); a driver cab (3) mounted on the frame (2); a first drive wheel (4) and a second drive wheel (5), which are configured to move the vehicle (1) forward in a travel direction (D); and a hydrogen accumulator (6) comprising a plurality of supply tanks (7), which are configured to contain hydrogen, and a housing structure (8), which houses the supply tanks (7) and is coupled to the frame (2) in a movable manner between a lowered position and a raised position.

## Description

### CROSS-REFERENCE TO RELATED APPLICATIONS

This patent application claims priority from Italian patent application no. 102024000005476 filed on March 12, 2024, the entire disclosure of which is incorporated herein by reference.

### TECHNICAL FIELD

The present invention relates to a hydrogen-powered vehicle and a transport method of said vehicle.

### STATE OF THE ART

In recent decades, the increasing focus on reducing global pollution has led to the development of vehicles equipped with alternative propulsion systems powered by renewable forms of energy. In particular, hydrogen-powered vehicles have been developed.

As is known, a hydrogen-powered vehicle comprises a first drive wheel and a second drive wheel, which are configured to move the vehicle forward, a hydrogen accumulator provided with a plurality of supply tanks containing hydrogen, and a propulsion system, which is powered by hydrogen provided by the hydrogen accumulator and is configured to transmit power to the first and to the second drive wheels.

In general, hydrogen-powered vehicles allow limiting the emissions of pollutant gases. However, the hydrogen accumulator results to be bulky and occupies a considerable space on the vehicle, making the maintenance operations of the internal components of the vehicle complicated.

Furthermore, the presence of the hydrogen accumulator limits the possibility to hook the vehicle to a lifting system, such as for example a crane or an articulated arm or a telescopic arm, so as to lift and load the vehicle onto a means of transport.

### SUBJECT-MATTER OF THE PATENT

An object of the present invention is to manufacture a hydrogen-powered vehicle which mitigates the drawbacks of the prior art highlighted herein.

In accordance with the present invention, a hydrogen-powered vehicle is manufactured, the vehicle extending along a longitudinal axis and comprising:
- a frame;
- a driver cab mounted on the frame;
- a first drive wheel and a second drive wheel, which are configured to move the vehicle forward in a travel direction; and
- a hydrogen accumulator comprising a plurality of supply tanks, which are configured to contain hydrogen, and a housing structure, which houses the supply tanks and is coupled to the frame in a movable manner between a lowered position and a raised position.

Thanks to the present invention, it is possible to move the housing structure from the lowered position to the raised position, so as to allow accessing the components of the vehicle which are located under the hydrogen accumulator and enable the maintenance of said components.

Furthermore, when the housing structure is in the raised position, it is possible to hook in a simple and quick manner the vehicle to a lifting system, such as for example a crane or an articulated arm or a telescopic arm, so as to lift and load the vehicle onto a means of transport.

In particular, the housing structure is hinged to the frame in a pivoting manner around a first rotation axis substantially perpendicular to the longitudinal axis.

In this manner, it is possible to move the housing structure from the lowered position to the raised position and vice versa by means of a rotation of the housing structure around the first rotation axis.

In particular, the housing structure comprises a support element, to which the supply tanks are attached, and a cover configured to be arranged around the support element and the supply tanks.

More specifically, the cover is coupled to the support element in a movable manner between a closed position, in which the cover is arranged around the support element and the supply tanks, and an open position, in which the cover is raised with respect to the support element and to the supply tanks.

In this manner, it is possible to move the cover from the closed position to the open position, keeping the support element in the lowered position.

In practice, the cover is hinged in a pivoting manner to the support element around a second rotation axis substantially parallel to the first rotation axis.

In this manner, it is possible to lift the cover with respect to the support element and to the supply tanks so as to allow the maintenance and/or the replacement of the supply tanks.

In particular, the cover has a plurality of through openings.

In this manner, in case of a leak of hydrogen from the supply tanks, it is possible to avoid a dangerous accumulation of hydrogen inside the cover and quickly disperse the hydrogen into the external environment.

Consequently, it is possible to avoid the installation of a hydrogen detector inside the cover.

In particular, the support element comprises an upper support, which supports a plurality of supply tanks aligned along a first support plane; and a lower support, which is integral with the upper support and supports at least one further supply tank along a second support plane.

In this manner, it is possible to house in the housing structure a plurality of supply tanks along two support planes vertically staggered.

In particular, the vehicle comprises at least one actuator, which is arranged between the frame and the housing structure and is configured to control the rotation of the housing structure around the first rotation axis, so as to move the housing structure from the lowered position to the raised position and vice versa.

In particular, the vehicle comprises a propulsion system, which is configured to be powered by hydrogen contained in the supply tanks and to transmit power to the first and to the second drive wheels.

In accordance with a first embodiment, the propulsion system comprises a fuel cell configured to receive hydrogen from the supply tanks and to generate electrical energy from the hydrogen received; and an electric motor, which is powered by the electrical energy generated by the fuel cell and is configured to transmit power to the first and to the second drive wheels.

In this manner, it is possible to utilize hydrogen contained in the supply tanks to generate electrical energy and to power the propulsion system of the vehicle.

In accordance with a second embodiment, the propulsion system comprises a hydrogen-powered internal combustion engine, which is configured to receive hydrogen from the supply tanks and to transmit power to the first and to the second drive wheels.

In this manner, it is possible to utilize hydrogen contained in the supply tanks to power the internal combustion engine.

In particular, the hydrogen accumulator comprises a refuelling manifold, which is configured to couple to a nozzle of a hydrogen refuelling system; an inlet port, which is movable between an open position, in which the inlet port allows the coupling between the refuelling manifold and the nozzle of the refuelling system, and a closed position, in which the inlet port prevents the coupling between the refuelling manifold and the nozzle of the refuelling system; a status sensor configured to detect the position of the inlet port; and a control unit, which is in communication with the status sensor and is configured to control the propulsion system as a function of the position of the inlet port detected by the status sensor.

In particular, the control unit is configured to keep the propulsion system deactivated when the control unit receives an open signal from the status sensor during the refuelling of the supply tanks. In other words, when the inlet port is open, the propulsion system can no longer be started.

In this manner, when the refuelling system is connected to the refuelling manifold of the vehicle, it is possible to prevent the vehicle from moving forward during the refuelling of the supply tanks, so as to avoid accidental damage to the vehicle and to the refuelling station while a pipe of the refuelling system is connected to the vehicle.

Furthermore, the refuelling manifold is configured to transmit temperature and pressure data from the hydrogen accumulator to the refuelling station and to transmit temperature and pressure data from the refuelling station to the control unit.

In particular, the vehicle comprises a first track and a second track, which are coupled to the first drive wheel and to the second drive wheel, respectively.

In this manner, it is possible to provide for a vehicle of tracked type, which can be used, for example, for preparing ski slopes or for operations in the agricultural sector or for working stretches of sand.

A further object of the present invention is to provide a transport method for transporting a hydrogen-powered vehicle which mitigates the drawbacks of the prior art highlighted herein.

In accordance with the present invention, a transport method for transporting a vehicle as previously described is provided, il transport method comprising the steps of:
- moving the housing structure of the hydrogen accumulator from the lowered position to the raised position;
- connecting the vehicle to a lifting system;
- lifting the vehicle by means of the lifting system; and
- loading the vehicle onto a means of transport.

Thanks to the fact that the housing structure can be brought into the raised position, it is possible to hook the vehicle to a lifting system, such as for example a crane or an articulated arm or a telescopic arm, and lift the vehicle by means of said lifting system in a simple and quick manner.

### BRIEF DESCRIPTION OF THE DRAWINGS

Further characteristics and advantages of the present invention will be evident from the following description of a non-limiting example embodiment, with reference to the accompanying figures, wherein:
- Figure 1 is a plan view, with parts removed for clarity, of a hydrogen-powered vehicle manufactured in accordance with the present invention;
- Figures 2-4 are side views, with parts removed for clarity and schematized parts, of the vehicle of Figure 1 in respective operating configurations;
- Figure 5 is a perspective view, with parts removed for clarity, of a hydrogen accumulator of the vehicle of Figure 1;

- Figures 6 and 7 are rear views, with parts removed for clarity and schematized parts, of a detail of the vehicle of Figure 1 in respective operating configurations; and
- Figure 8 is a side view, with parts removed for clarity, of the vehicle of Figure 1 in a step of a transport method provided in accordance with the present invention.

### DETAILED DESCRIPTION OF THE DRAWINGS

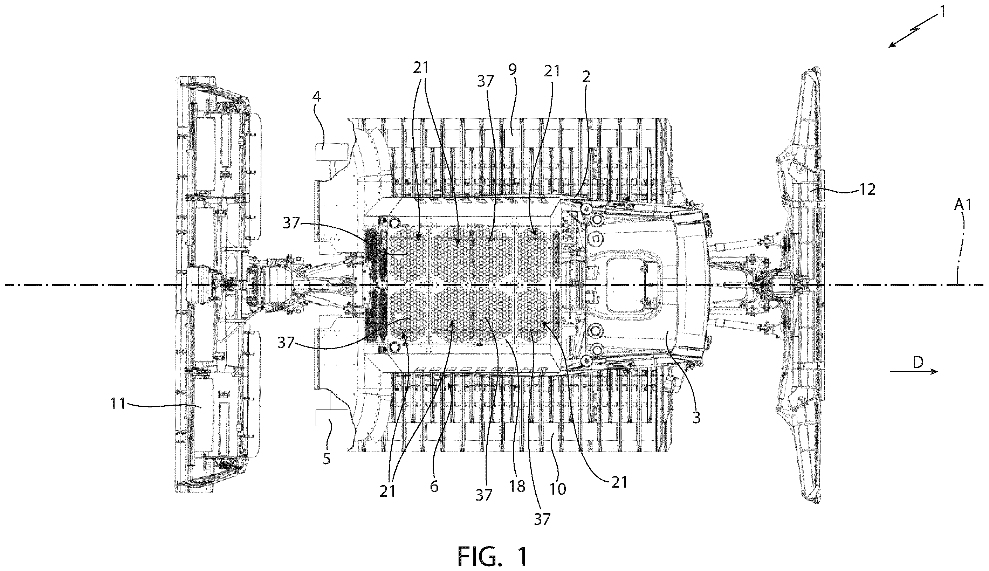

With reference to Figure 1, reference numeral 1 indicates, as a whole, a hydrogen-powered vehicle.

In the non-limiting case of the present invention described and illustrated herein, the vehicle 1 is of tracked type.

It is understood that the vehicle 1 can be of a type different from the tracked type and can comprise for example tyres, without thereby departing from the scope of application of the present invention.

In accordance with the embodiment illustrated in Figure 1, the vehicle 1 is used for preparing ski slopes. In particular, the vehicle 1 is a snow groomer vehicle.

More specifically, the vehicle 1 is used for preparing alpine ski slopes, and/or cross-country ski slopes, and/or ski jump ramps, and/or half pipe ski slopes, and/or snow-parks.

It is understood that, in accordance with a further embodiment, the vehicle 1 can be used for operations in the agricultural sector, such as for example for collecting and/or moving agricultural products and/or for ensiling forage and/or for collecting and/or moving bagasse. According to such configuration, the vehicle 1 can comprise a shredder preferably positioned on the front side of the vehicle 1 and can be used for shredding vegetation.

In accordance with a further embodiment, the vehicle 1 can be used for cleaning beaches and/or for working stretches of sand.

The vehicle 1 extends along a longitudinal axis A1 and comprises a frame 2; a driver cab 3 mounted on the frame 2; a drive wheel 4 and a drive wheel 5, which are configured to move the vehicle 1 forward in a travel direction D; and a hydrogen accumulator 6.

In the case described and illustrated herein, the vehicle 1 comprises a track 9 and a track 10, which are coupled to the drive wheel 4 and to the drive wheel 5, respectively.

Furthermore, the vehicle 1 comprises a cutter 11 connected in a movable manner to the frame 2, and a shovel 12 connected in a movable manner to the frame 2.

In particular, the driver cab 3 is arranged at the front of the vehicle 1 and faces the shovel 12. The hydrogen accumulator 6 is arranged behind the driver cab 3 with respect to the travel direction D of the vehicle 1.

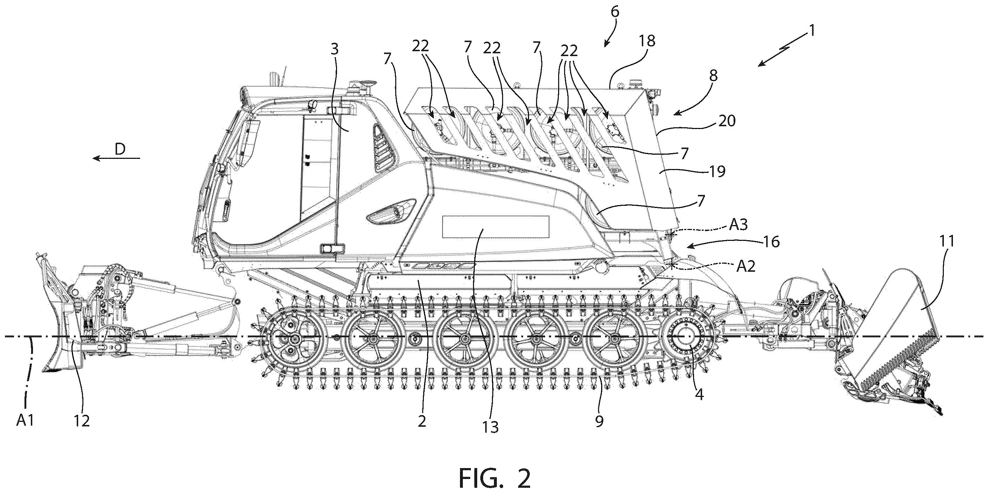

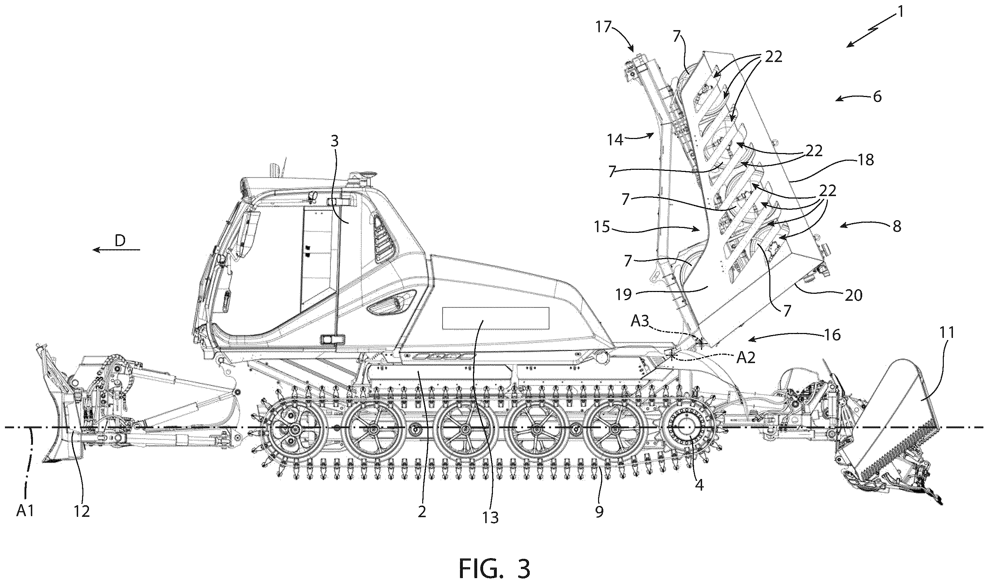

With reference to Figures 2-4, the hydrogen accumulator 6 comprises a plurality of supply tanks 7, which are configured to contain hydrogen, and a housing structure 8, which houses the supply tanks 7 and is coupled to the frame 2 in a movable manner between a lowered position (Figure 2) and a raised position (Figure 3).

In particular, the vehicle 1 comprises a propulsion system 13, which is configured to be powered by hydrogen contained in the supply tanks 7 and to transmit power to the drive wheels 4 and 5.

In accordance with a first embodiment, the propulsion system 13 comprises a fuel cell, not shown in the accompanying figures, which is configured to receive hydrogen from the supply tanks 7 and to generate electrical energy from the hydrogen received; and an electric motor, not shown in the accompanying figures, which is powered by the electrical energy generated by the fuel cell and is configured to transmit power to the drive wheels 4 and 5.

In accordance with a second embodiment, the propulsion system 13 comprises a hydrogen-powered internal combustion engine, not shown in the accompanying figures, which is configured to receive hydrogen from the supply tanks 7 and to transmit power to the drive wheels 4 and 5.

In particular, the housing structure 8 is hinged to the frame 2 in a pivoting manner around a rotation axis A2 substantially perpendicular to the longitudinal axis A1.

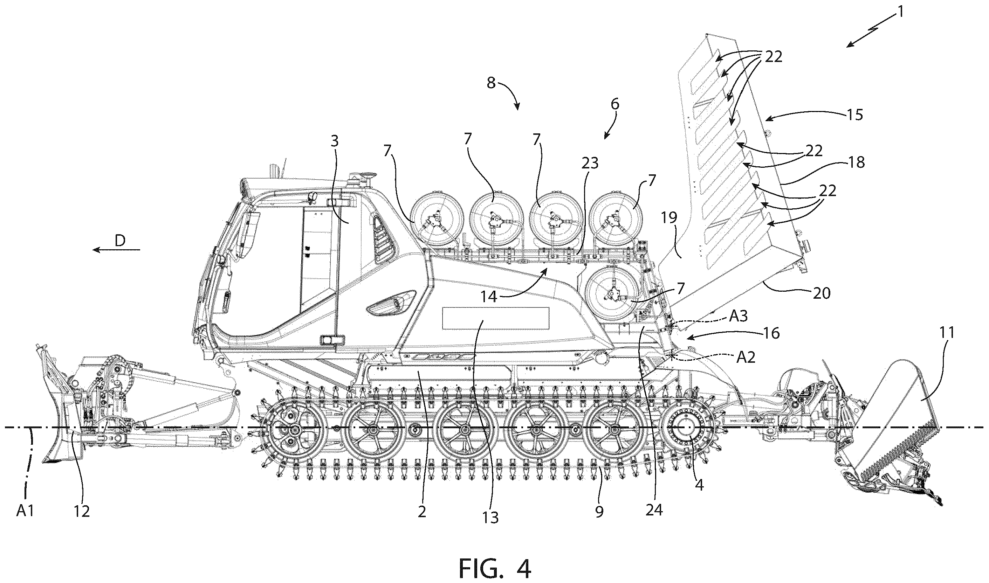

With reference to Figure 4, the housing structure 8 comprises a support element 14, to which the supply tanks 7 are attached, and a cover 15 configured to be arranged around the support element 14 and the supply tanks 7.

The cover 15 is coupled to the support element 14 in a movable manner between a closed position (Figures 2 and 3), in which the cover 15 is arranged around the support element 14 and the supply tanks 7, and an open position (Figure 4), in which the cover 15 is raised with respect to the support element 14 and the supply tanks 7.

In particular, the cover 15 is hinged in a pivoting manner to the support element 14 around a rotation axis A3 substantially parallel to the rotation axis A2.

In practice, the support element 14 comprises an end 16 hinged to the frame 2 around the rotation axis A2 and the cover 15 is hinged to the support element 14 around the rotation axis A3 so as to allow the free rotation of the cover 15 with respect to the support element 14.

Furthermore, the support element 14 comprises an end 17 (Figure 3), which is opposite the end 16 and is configured to couple to a coupling portion of the frame 2 when the housing structure 8 is in the lowered position (Figure 2).

In the non-limiting case of the present invention described and illustrated herein, the cover 15 comprises an upper wall 18, two side walls 19, and a rear wall 20.

In practice, the upper wall 18, the side walls 19 and the rear wall 20 delimit a housing space. In the closed position, the support element 14 and the supply tanks 7 are arranged inside said housing space.

Furthermore, the cover 15 has a plurality of through openings 21 (Figure 1) and a plurality of through openings 22 (Figures 2-4).

In particular, with reference to Figure 1, the through openings 21 are obtained in the upper wall 18. More specifically, the upper wall 18 comprises a plurality of grids 37, each of which is arranged in the respective through opening 21.

With reference to Figures 2-4, the through openings 22 are obtained in the side walls 19.

Thanks to the through openings 21 and 22 it is possible to directly connect the housing space obtained inside the cover 15 to the external environment.

In accordance with an embodiment, not shown in the accompanying figures, the vehicle 1 comprises an actuator, which is arranged between the frame 2 and the housing structure 8 and is configured to control the rotation of the housing structure 8 around the rotation axis A2. Preferably, said actuator comprises a hydraulic cylinder.

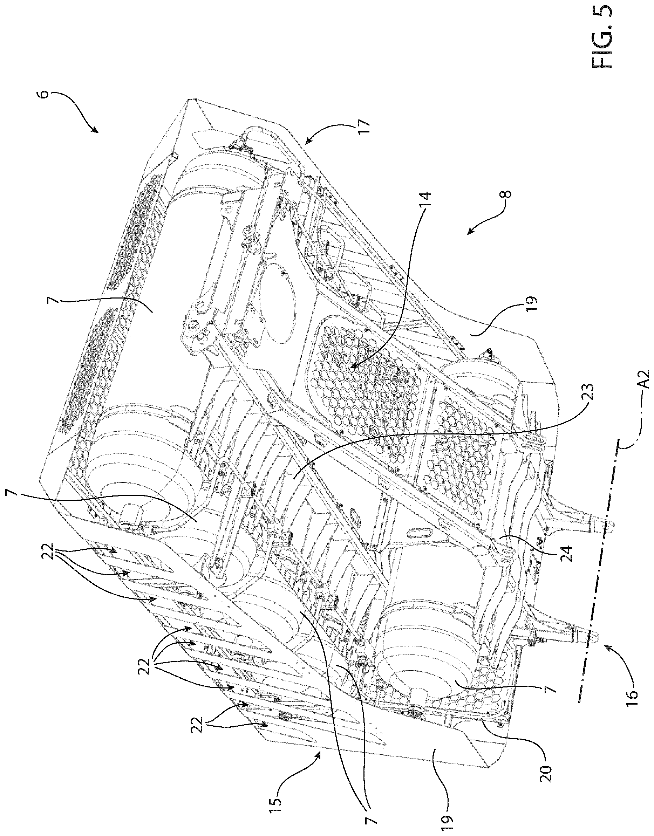

With reference to Figure 5, the support element 14 comprises an upper support 23, which supports a plurality of supply tanks 7 aligned along a first support plane; and a lower support 24, which is integral with the upper support 23 and supports at least one further supply tank 7 along a second support plane.

In the non-limiting case of the present invention described and illustrated herein, the upper support 23 supports four supply tanks 7 and the lower support 24 supports one supply tank 7.

It is understood that, the number and the arrangement of the supply tanks 7 supported by the upper support 23 and by the lower support 24 can vary, without thereby departing from the scope of application of the present invention.

In particular, each supply tank 7 extends along a respective transverse axis substantially perpendicular to the longitudinal axis A1 of the vehicle 1. More specifically, each supply tank 7 has a substantially cylindrical shape with rounded ends.

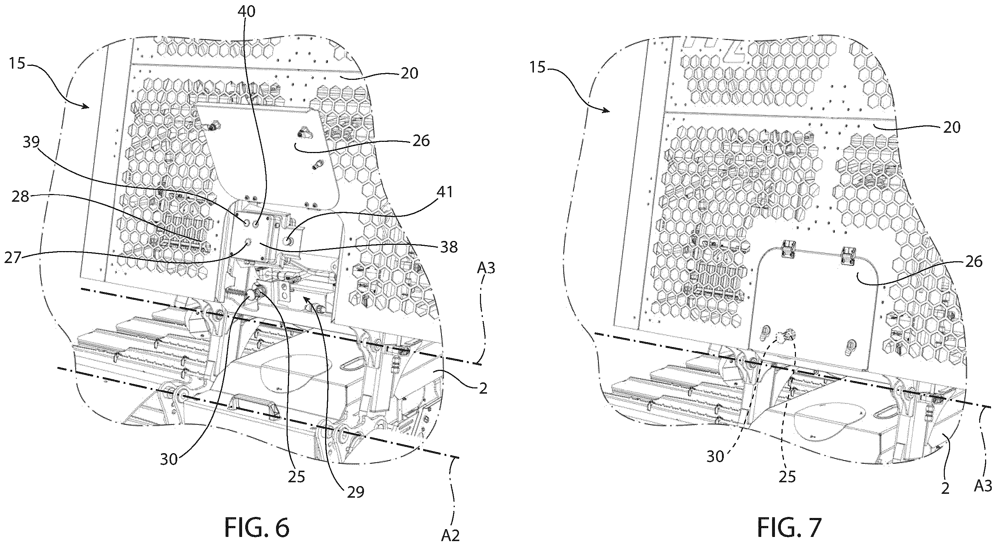

With reference to Figures 6 and 7, the hydrogen accumulator 6 comprises a refuelling manifold 25, which is configured to couple to a nozzle of a hydrogen refuelling system, not shown in the accompanying figures; an inlet port 26, which is movable between an open position (Figure 6), in which the inlet port 26 allows the coupling between the refuelling manifold 25 and the nozzle of the refuelling system, and a closed position (Figure 7), in which the inlet port 26 prevents the coupling between the refuelling manifold 25 and the nozzle of the refuelling system; a status sensor 27 configured to detect the position of the inlet port 26; and a control unit 28, which is in communication with the status sensor 27 and is configured to control an activation/deactivation of the propulsion system 13 (Figures 2-4) as a function of the position of the inlet port 26 detected by the status sensor 27.

In the non-limiting case of the present invention described and illustrated herein, the inlet port 26 is hinged to the cover 15 so as to selectively open and close an inlet passage 29 for the nozzle of the refuelling system obtained in the cover 15. In other words, in the open position (Figure 6), the inlet port 26 opens the inlet passage 29, and, in the closed position (Figure 7), the inlet port 26 opens the inlet passage 29.

In particular, the inlet port 26 is hinged to the rear wall 20 and the inlet passage 29 is obtained in the rear wall 20.

More specifically, the refuelling manifold 25 is arranged inside the housing space of the cover 15, at the inlet passage 29.

In particular, the status sensor 27 is arranged at the inlet passage 29. More specifically, the status sensor 27 is configured to detect the position of the inlet port 26 and to emit a closed signal when the inlet port 26 is in the closed position (Figure 7) and/or an open signal when the inlet port 26 is in the open position (Figure 6).

The control unit 28 is configured to receive the closed signal and/or the open signal emitted by the status sensor 27 and to selectively activate/deactivate the propulsion system 13 (Figures 2-4) as a function of the open signal and/or of the closed signal received.

From the operating point of view, the control unit 28 is configured to keep the propulsion system 13 deactivated when the control unit 28 receives an open signal from the status sensor 27. Vice versa, the control unit 28 is configured to activate the propulsion system 13 or to keep the propulsion system 13 activated when the control unit 28 receives a closed signal from the status sensor 27.

Furthermore, the hydrogen accumulator 6 comprises a closure plug 30, which is preferably made of a polymeric material and is configured to close the refuelling manifold 25 so as to prevent external agents from entering the refuelling manifold 25.

With reference to Figure 6, the hydrogen accumulator 6 is equipped with a controller 38, which is in communication with the control unit 28 and comprises the status sensor 27, a light indicator 39 configured to emit light as a function of the refuelling status of the supply tanks 7, a refuelling button 40 configured to activate/deactivate the refuelling of the supply tanks 7, and an emergency stop button 41.

In use and with reference to Figures 1 and 2, the rotation of the housing structure 8 around the rotation axis A2 is actuated so as to bring the housing structure 8 from the lowered position (Figure 2) to the raised position (Figure 3). In this manner, it is possible to allow the access to the components of the vehicle 1 which are located under the hydrogen accumulator 6 and to enable the maintenance of said components.

With reference to Figures 2 and 4, the rotation of the cover 15 around the rotation axis A3 is actuated so as to bring the cover 15 from the closed position (Figure 2) to the open position (Figure 4). During the rotation of the cover 15, the support element 14 is kept still in the lowered position.

In this manner, it is possible to access the supply tanks 7 for allowing the maintenance and/or the replacement of the supply tanks 7.

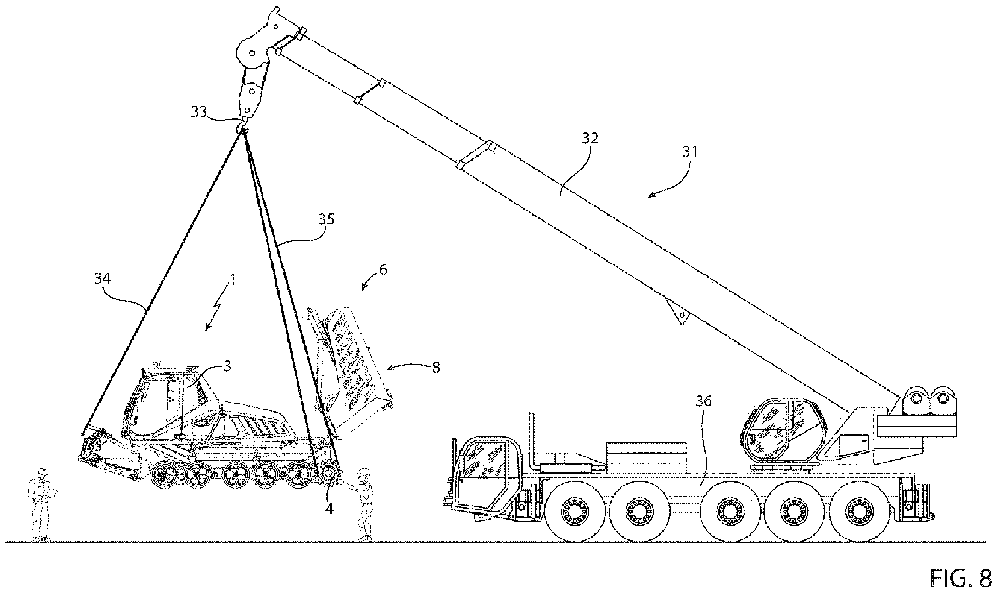

With reference to Figure 8, the housing structure 8 is moved from the lowered position to the raised position.

Once the housing structure 8 is in the raised position, the vehicle 1 is connected to a lifting system 31.

In the case described and illustrated herein, the lifting system 31 comprises a telescopic arm 32 provided with a hook 33 at an end. It is understood that, in accordance with further embodiments not shown in the accompanying figures, the lifting system 31 can comprise a crane or an articulated arm.

In particular, during the step of connecting the vehicle 1 to the lifting system 31, the telescopic arm 32 arranges the hook 33 over the vehicle 1 and the hook 33 is connected to a front portion and to a rear portion of the vehicle 1 by means of connecting elements 34 and 35, such as for example belts or bands.

More specifically, the connecting element 34 connects the hook 33 to a front portion of the vehicle 1 and two connecting elements 35 (only one of which is visible in Figure 8) connect the hook 33 to a rear portion of the vehicle 1.

In the non-limiting case of the present invention described and illustrated herein, each connecting element 35 connects the hook 33 to a respective drive wheel 4, 5.

Once the hook 33 is connected to the vehicle 1, the lifting system 31 lifts the vehicle 1 and loads the vehicle 1 onto a means of transport 36.

At this point, the means of transport 36 transports the vehicle 1 from one work site to a further work site.

It is evident that variations can be made to the present invention without thereby departing from the scope of protection of the appended claims.

## Claims

1. A hydrogen-powered vehicle, the vehicle (1) extending along a longitudinal axis (A1) and comprising:
- a frame (2);
- a driver cab (3) mounted on the frame (2);
- a first drive wheel (4) and a second drive wheel (5), which are configured to move the vehicle (1) forward in a travel direction (D); and
- a hydrogen accumulator (6) comprising a plurality of supply tanks (7), which are configured to contain hydrogen, and a housing structure (8), which houses the supply tanks (7) and is coupled to the frame (2) in a movable manner between a lowered position and a raised position.

2. The vehicle as claimed in claim 1, wherein the hydrogen accumulator (6) is arranged behind the driver cab (3) with respect to the travel direction (D) of the vehicle (1).

3. The vehicle as claimed in claim 1 or 2, wherein the housing structure (8) is hinged to the frame (2) in a pivoting manner around a first rotation axis (A2) substantially perpendicular to the longitudinal axis (A1).

4. The vehicle as claimed in claim 3, wherein the housing structure (8) comprises a support element (14), to which the supply tanks (7) are attached, and a cover (15) configured to be arranged around the support element (14) and the supply tanks (7).

5. The vehicle as claimed in claim 4, wherein the cover (15) is coupled to the support element (14) in a movable manner between a closed position, in which the cover (15) is arranged around the support element (14) and the supply tanks (7), and an open position, in which the cover (15) is raised with respect to the support element (14) and to the supply tanks (7).

6. The vehicle as claimed in claim 5, wherein the cover (15) is hinged in a pivoting manner to the support element (14) around a second rotation axis (A3) substantially parallel to the first rotation axis (A2).

7. The vehicle as claimed in any one of claims 4 to 6, wherein the cover (15) has a plurality of through openings (21, 22).

8. The vehicle as claimed in any one of claims 4 to 7, wherein the support element (14) comprises an upper support (23), which supports a plurality of supply tanks (7) aligned along a first support plane; and a lower support (24), which is integral with the upper support (23) and supports at least one further supply tank (7) along a second support plane.

9. The vehicle as claimed in any one of claims 3 to 8, and comprising at least one actuator, which is arranged between the frame (2) and the housing structure (8) and is configured to control the rotation of the housing structure (8) around the first rotation axis (A2).

10. The vehicle as claimed in any one of the foregoing claims, and comprising a propulsion system (13), which is configured to be powered by hydrogen contained in the supply tanks (7) and to transmit power to the first and to the second drive wheels (4, 5).

11. The vehicle as claimed in claim 10, wherein the propulsion system (13) comprises a fuel cell configured to receive hydrogen from the supply tanks (7) and to generate electrical energy from the hydrogen received; and an electric motor, which is powered by the electrical energy generated by the fuel cell and is configured to transmit power to the first and to the second drive wheels (4, 5).

12. The vehicle as claimed in claim 10, wherein the propulsion system (13) comprises a hydrogen-powered internal combustion engine, which is configured to receive hydrogen from the supply tanks (7) and to transmit power to the first and to the second drive wheels (4, 5).

13. The vehicle as claimed in any one of claims 10 to 12, wherein the hydrogen accumulator (6) comprises a refuelling manifold (25), which is configured to couple to a nozzle of a hydrogen refuelling system; an inlet port (26), which is movable between an open position, in which the inlet port (26) allows the coupling between the refuelling manifold (25) and the nozzle of the refuelling system, and a closed position, in which the inlet port (26) prevents the coupling between the refuelling manifold (25) and the nozzle of the refuelling system; a status sensor (27) configured to detect the position of the inlet port (26); and a control unit (28), which is in communication with the status sensor (27) and is configured to control the propulsion system (13) as a function of the position of the inlet port (26) detected by the status sensor (27).

14. The vehicle as claimed in any one of the foregoing claims, and comprising a first track (9) and a second track (10), which are coupled to the first drive wheel (4) and to the second drive wheel (5) respectively.

15. A transport method to transport a vehicle as claimed in any one of the foregoing claims, the transport method comprising the steps of:
- moving the housing structure (8) of the hydrogen accumulator (6) from the lowered position to the raised position;
- connecting the vehicle (1) to a lifting system (31);
- lifting the vehicle (1) by means of the lifting system (31); and
- loading the vehicle (1) onto a means of transport (36).

16. The transport method as claimed in claim 15, wherein the steps of connecting the vehicle (1) to a lifting system (31) comprises arranging a hook (33) of the lifting system (31) over the vehicle (1); and connecting said hook (33) to a front and rear portion of the vehicle (1) by means of connecting elements (34, 35).
